(19) Europäisches Patentamt
European Patent Office
Office européen des brevets

(11) **EP 4 109 813 B1**

(12) **EUROPEAN PATENT SPECIFICATION**

(45) Date of publication and mention
of the grant of the patent:
**14.08.2024 Bulletin 2024/33**

(21) Application number: **21757341.9**

(22) Date of filing: **15.02.2021**

(51) International Patent Classification (IPC):
*H04L 9/32* $^{(2006.01)}$    *G06F 21/31* $^{(2013.01)}$
*H04L 9/40* $^{(2022.01)}$    *H04L 9/14* $^{(2006.01)}$

(52) Cooperative Patent Classification (CPC):
**G06F 21/34; G06F 21/32; H04L 9/14; H04L 9/3226;
H04L 63/0815; H04L 63/0884;** H04L 2209/46;
H04L 2209/76

(86) International application number:
**PCT/JP2021/005529**

(87) International publication number:
**WO 2021/166848 (26.08.2021 Gazette 2021/34)**

(54) **ENCRYPTION AUTHENTICATION SYSTEM, USER TERMINAL, SERVICE SERVER, AND PROGRAM**

VERSCHLÜSSELUNGSAUTHENTIFIZIERUNGSSYSTEM, BENUTZERENDGERÄT, DIENSTSERVER UND PROGRAMM

SYSTÈME D'AUTHENTIFICATION DE CHIFFREMENT, TERMINAL UTILISATEUR, SERVEUR DE SERVICE ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2020 JP 2020025659**

(43) Date of publication of application:
**28.12.2022 Bulletin 2022/52**

(73) Proprietor: **Tokyo University of Science Foundation
Tokyo 162-8601 (JP)**

(72) Inventors:
• **IRIYAMA, Satoshi
Tokyo 162-8601 (JP)**
• **KIHARA, Maki
Tokyo 162-8601 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
**WO-A1-2019/124164    JP-A- 2005 149 341
JP-A- 2016 502 377    US-A1- 2015 281 188
US-A1- 2017 147 796    US-A1- 2021 105 255**

**Description**

Technical Field

The present disclosure relates to an encryption authentication system, and particularly to an encryption authentication system, a user terminal, a service server, and a program for collating input information.

Background Art

In the related art, a technique of processing encrypted information has been developed.

For example, there is a technique related to so-called single sign-on that performs, as an agency, authentication of a certain Web site that requires authentication of a user (Japanese Patent Application Laid-Open (JP-A) No. 2002-032340). In this technique, in a system in which a plurality of Web sites requiring user authentication are used from a user terminal, a proxy that performs, as an agency, authentication between a Web server and the user terminal is disposed. The number of operations in user authentication work is reduced by causing the proxy to perform, as an agency, authentication on the Web site.

In addition, as a technique related to the single sign-on, there is a technique of realizing a single sign-on function without requiring an authentication state management server that collectively manages authentication states, and reducing a system construction cost and an operation management cost (Japanese Patent Application Laid-Open (JP-A) No. 2002-335239). In this technique, an authentication state of a user is shared by a plurality of servers, and the servers manage the authentication state of the user in a distributed manner by comparing authentication levels with each other.

In addition, as a technique related to the single sign-on, there is a technique related to an authentication system that does not require a user to separately hold a physical device for authentication regardless of a setting environment of a personal computer (Japanese Patent Application Laid-Open (JP-A) No. 2011-238036). In this technique, a server performs login authentication of a user of a client PC that is a transmission source of a login request corresponding to a client session ID and manages login information, based on an individual identification number received from a portable phone.

In addition, as a technique related to the single sign-on, there is a technique of coping with a risk of storing all pieces of authentication information in a conventional type of proxy (Japanese Patent No. 6518378). In this technique, preregistration of a user and a service server is performed in advance by using a resource server and an authentication server, and authentication is performed by using preregistered information.

SUMMARY OF INVENTION

Technical Problem

In the conventional single sign-on method in Patent Literatures 1 to 3, a so-called Kerberos authentication method of issuing a ticket as an identity certificate of a user is used. However, there is a risk of information leakage due to eavesdropping on tickets. In addition, an encryption key for ensuring secure communication with the user is also required. As described above, in a case where security is intended to be sufficiently secured, there is a problem that complexity in implementation occurs and an introduction cost is high.

In addition, although the method in Patent Literature 4 is a method not using a proxy, it is necessary to manage the generated access token on a user side, and there is a risk of information leakage, impersonation, and the like in the case of eavesdropping. Although personal information is not provided to the service server, the personal information of the user is managed in the database as unencrypted data in the resource server. Therefore, there is still a problem in management of handling of the personal information. In addition, an authentication-side decryption key from the authentication server and a unique decryption key from the resource server are distributed to the service server side, and the user information is decrypted on the service server side. Therefore, there is also a problem of complexity in key management, and there is also a risk of eavesdropping on the decryption key and information leakage due to decryption itself.

In addition, management of an ID and a password used for authentication of single sign-on is complicated, and is entrusted to management of an individual. Therefore, there is a risk of leakage fundamentally. In addition, there is an actual situation in which use of biometric information is avoided because the biometric information is sensitive information.

As described above, although the single sign-on mechanism is highly convenient, there are various problems in terms of risks, management costs, and the like.

The disclosure has been made in view of the above circumstances, and an object of the disclosure is to provide an encryption authentication system, a user terminal, a service server, and a program capable of enabling high-speed and safe provision of a cross-sectional authentication service while concealing personal information of a user.

Solution to Problem

In order to achieve the above object, according to a first aspect of the disclosure, there is provided an encryption authentication system according to claim 1.

Advantageous Effects of Invention

According to the encryption authentication system, the user terminal, the service server, and the program of the disclosure, it is possible to obtain an effect of enabling high-speed and safe provision of a cross-sectional authentication service while concealing personal information of a user.

BRIEF DESCRIPTION OF DRAWINGS

Fig. 1 is an image diagram of an introduction scene of an encryption authentication system of the disclosure.
Fig. 2 is a diagram illustrating a simple configuration of the encryption authentication system of the disclosure.
Fig. 3 is a block diagram illustrating a hardware configuration of a computer corresponding to a user terminal and each server.
Fig. 4 is a diagram schematically illustrating a process flow of a registration procedure and an authentication agency procedure of the encryption authentication system of the disclosure.
Fig. 5 is a sequence diagram illustrating a flow of a registration procedure of the user terminal.
Fig. 6 is a sequence diagram illustrating a flow of a registration procedure of a service server.
Fig. 7 is a sequence diagram illustrating a flow of an authentication agency procedure (collation procedure).
Fig. 8 is a block diagram illustrating specific functional configurations of the user terminal and the service server.
Fig. 9 is a diagram illustrating an example of encryption keys stored in a registration key storage unit and a temporary key storage unit of the service server.
Fig. 10 is a block diagram illustrating specific functional configurations of a registration encryption server, a collation encryption server, and a calculation server.
Fig. 11 is a diagram illustrating an example of encryption keys stored in a user key storage unit and a temporary key storage unit of the collation encryption server.
Fig. 12 is a diagram illustrating an example of pieces of encryption information stored in a user encryption information storage unit and a service encryption information storage unit of the calculation server.
Fig. 13 is a diagram illustrating an example of a collation speed of a method of the disclosure.
Fig. 14 is a diagram illustrating an example of a case where another method is compared with the method of the disclosure.

DESCRIPTION OF EMBODIMENTS

Hereinafter, an embodiment of the disclosure will be described in detail with reference to the drawings.
First, the background leading to the proposal of the technique in the embodiment of the disclosure will be described.
An authentication agency service is a service that performs, as an agency, login to an individual service in a case where various different services are used on the Internet, and several methods are proposed and implemented. The authentication agency service uses a single ID and password of a user or authentication information based on biometric information or other types of personal information, in order to ensure the safety and convenience of login. In a single sign-on mechanism provided by the authentication agency service, a user does not need to store individual login information for each service, and only needs to show a ticket issued from the authentication agency service itself. Therefore, the convenience of the user is improved, and even in a case where an individual service is used, it is possible to reduce security risks such as impersonation and eavesdropping on login information.
However, as described in the above problem, there are various problems in the conventional single sign-on mechanism. For example, there are complexity in implementation, ensuring of reliability of the authentication agency service itself, difficulty of management of personal information, risk management in the case of using biometric information, management of a domain of the authentication agency service, and the like.
Thus, in a method proposed in the disclosure, an authentication method using collatable encryption information is proposed. As a prerequisite technique, there is the technology of Reference Literature 1 developed by the inventors of the technique of the disclosure.

[Reference Literature 1] WO 2019/124164 A

The technique of Reference Literature 1 proposes an encryption authentication system that performs collation at a high speed while concealing personal information of a user in each of a plurality of encryption devices. The technique of Reference Literature 1 uses a mechanism in which personal information is held in an encrypted state and collation is performed at a high speed without being decrypted even in authentication. With such a mechanism, Reference Literature 1 realizes an authentication mechanism having high security and convenience, for example, in a case where entrance/exit of a hotel is managed by certain information of a user (for example, a card, a fingerprint, or the like possessed by the user.).

The method of the disclosure is common to Reference Literature 1 in that collation is performed while personal information is concealed. In the method of the disclosure, an encryption authentication system capable of executing a collation process necessary for authentication of single sign-on at a high speed while concealing personal information of a user is realized by managing encryption keys in a distributed manner on an authentication agency service side and a service side. The encryption authentication system of the disclosure has a mechanism in which the authentication agency service side manages personal information while concealing personal information of a user, and the service providing side performs final collation. A secure configuration is ensured while complexity in implementation of single sign-on is avoided.

With the encryption authentication system of the disclosure, it is possible to perform authentication without passing personal information of a user for services of a plurality of service providers in the single sign-on mechanism. Thus, the service provider side can provide a cross-sectional service that cooperates with various services via a Web application or the like, without managing personal information. Since the personal information is managed while being concealed, there is an advantage in that authentication with high convenience can be performed by a user and by using unique personal information other than information that may cause information leakage, such as an ID and a password. Since the authentication agency service side manages encrypted personal information as registration information, and a user side does not need to manage tickets and the like, the user can safely use various services expanded across by service providers.

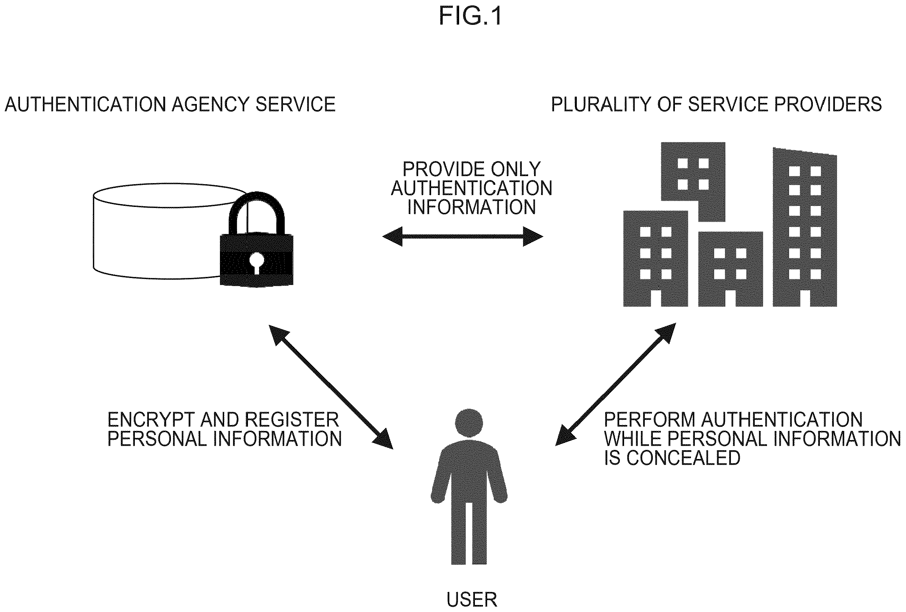

Fig. 1 is an image diagram of an introduction scene of an encryption authentication system of the disclosure. A user encrypts and registers personal information in the authentication agency service. In the authentication agency service, the personal information is managed in an encrypted state, that is, in a concealed state. In a case where the user requests any one of a plurality of service providers for authentication of service use, a process related to the authentication is performed among three sides of the service provider, the user, and the authentication agency service, and the authentication is performed on the service provider side while the personal information is concealed.

An example of an introduction scene of an encryption authentication system will be described. For example, in a case in which a service provider A that provides a certain service introduces an authentication system for an application of an office device, an authentication agency service that manages the encryption authentication system of the present disclosure can be used. In this case, a customer or an employee of the service provider A becomes a target user by the service provider A introducing the authentication agency service. The users can use not only the application of the office device of the service provider A but also related services, child services, and applications of third parties of other service providers by the single sign-on mechanism. The authentication agency service can collect a usage fee of a service server of the service provider and an authentication agency fee. The service server is assumed to be a server that manages various services such as a cloud management system of a dental chart, a database of video contents, and a smart front of an accommodation facility in accordance with the service of the service provider. Thus, the convenience of the user is improved, and the cost burden and the security risk of the management operation of the personal information of the customer or the employee who is the user can be greatly reduced for the service provider (medical institution, broadcaster, travel agency, or the like). Even in a case in which the service provider performs cross-service cooperation and provision as described above, the user only needs to first register personal information as encryption information in the authentication agency service.

A method of the encryption authentication system of the disclosure will be described below in detail.

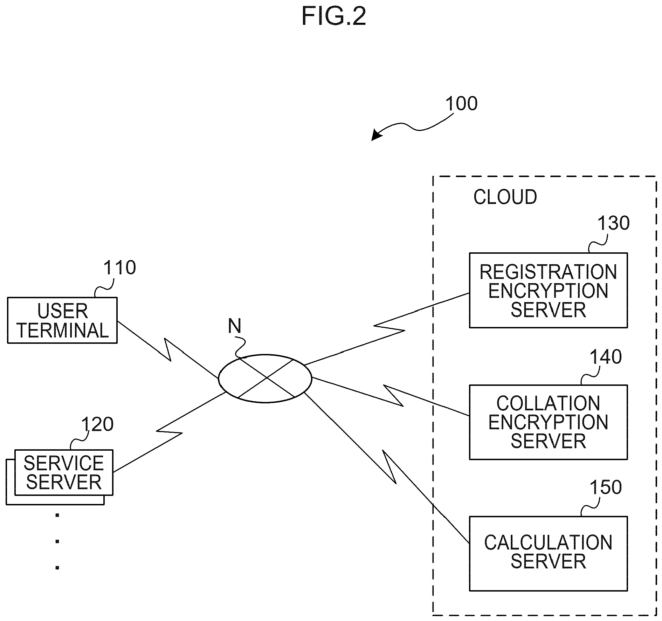

Fig. 2 is a diagram illustrating a simple configuration of the encryption authentication system of the disclosure. As illustrated in Fig. 2, an encryption authentication system 100 includes a user terminal 110, a service server 120, a registration encryption server 130, a collation encryption server 140, and a calculation server 150. In the encryption authentication system 100, each device is connected via a network N. The service server 120 is a server of an authentication requester for each of a plurality of service providers. Among the servers, the registration encryption server 130, the collation encryption server 140, and the calculation server 150 are assumed to be servers existing on a cloud, and are servers on the authentication agency service side. Whether each of the plurality of service servers 120 is a server on a cloud or a physical server is freely determined. The registration encryption server 130 and the collation encryption server 140 may be an integrated server. The registration encryption server 130, the collation encryption server 140, and the calculation server 150 may be managed by different authentication agency service providers.

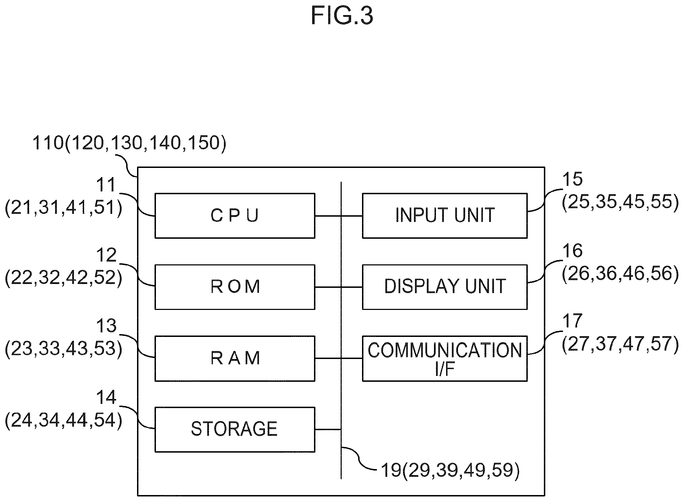

Fig. 3 is a block diagram illustrating the hardware configuration of a computer corresponding to the user terminal 110 and each of the servers (120, 130, 140, and 150). Since hardware configurations of the respective devices may be common, the devices will be described with reference to one drawing. As illustrated in Fig. 3, each device includes a central processing unit (CPU) 11, a read only memory (ROM) 12, a random access memory (RAM) 13, a storage 14, an input unit 15, a display unit 16, and a communication interface (I/F) 17. The respective components are communicably connected to each other via a bus 19. In Fig. 3, for example, in a case where the user terminal 110 is set to the CPU 11, the service server may be replaced with a CPU 21, the registration encryption server 130 may be replaced with a CPU 31, the collation encryption server 140 may be replaced with a CPU 41, and the calculation server 150 may be replaced with a CPU 51. The same applies to the other blocks.

The CPU 11 is a central processing unit, and executes various programs and controls each unit. That is, the CPU 11 reads a program from the ROM 12 or the storage 14, and executes the program by using the RAM 13 as a work area. The CPU 11 controls the respective components and executes various arithmetic processes, in accordance with the program stored in the ROM 12 or the storage 14. In the present embodiment, an object tracking program is stored in the ROM 12 or the storage 14.

The ROM 12 stores various programs and various types of data. The RAM 13 temporarily stores programs or data as a work area. The storage 14 includes a storage device such as a hard disk drive (HDD) or a solid state drive (SSD), and stores various programs including an operating system and various types of data.

The input unit 15 includes a pointing device such as a mouse and a keyboard, and is used to perform various inputs.

The display unit 16 is, for example, a liquid crystal display, and displays various types of information. The display unit 16 may function as the input unit 15 by adopting a touch panel system.

The communication interface 17 is an interface for communicating with another device such as a terminal, and for example, standards such as ETHERNET (registered trademark), FDDI, and WI-FI (registered trademark) are used. The hardware configuration of each device has been described above.

The user terminal 110 includes a program and an interface capable of executing an application capable of executing an encryption process. The application reads and uses predetermined information (for example, card information, biometric information, or the like) as personal information p1 (p1'). In the user terminal 110, cooperation is set for each of the plurality of service servers 120. By setting the cooperation, for example, a timing of transmitting a request for an authentication request necessary in a case where the user uses a plurality of services is determined in advance. For example, in a lodging facility, there is a case where authentication of the facility itself and authentication of a video service accompanying the facility are required. In such a case, authentication with a service server 120A of the lodging facility and authentication with a service server 120B of the video service are required. In this case, cooperation may be set so that authentication is performed simultaneously at the time of check in to the lodging facility. Even though not simultaneously, for example, the authentication of the service server 120B of the video service may be performed after the successful authentication of the service server 120 A of the lodging facility can be confirmed. Even in a case where there is authentication of a plurality of services at such a concentrated timing, the user can seamlessly use the plurality of services without making an authentication request each time. Such cooperation settings may be received from the collation encryption server 140. The personal information p1 (p1') is an example of first plaintext information of the disclosure.

The service server 120 has a program and an interface capable of executing an encryption process and a collation process and capable of executing an application that manages a key. The application uses certain information p2 (p2') of the service server 120. The certain information p2 (p2') is an example of second plaintext information of the disclosure.

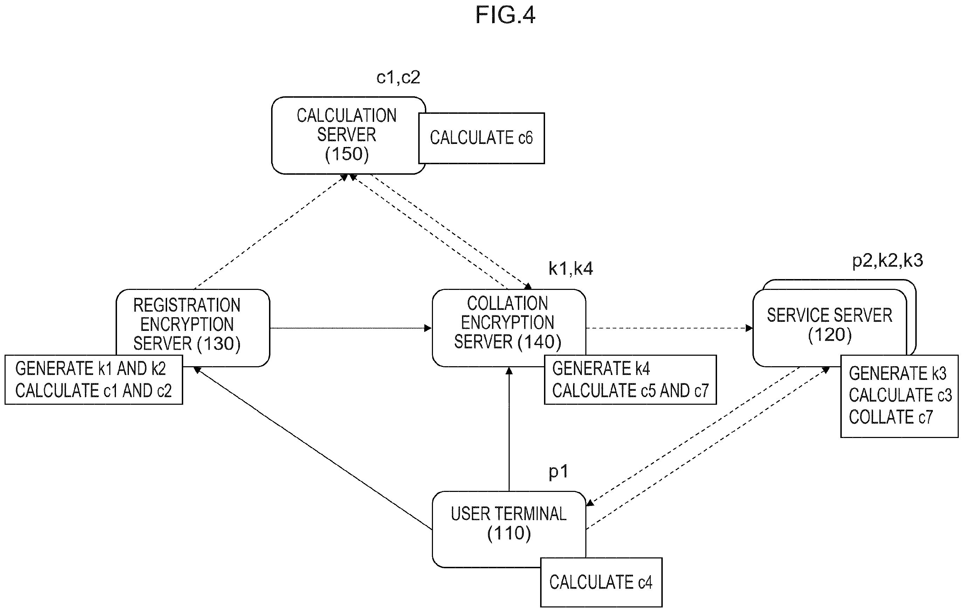

The method of the encryption authentication system of the disclosure is roughly divided into a registration procedure and an authentication agency procedure. Fig. 4 is a diagram schematically illustrating a process flow of the registration procedure and the authentication agency procedure of the encryption authentication system of the disclosure. Among paths illustrated in Fig. 4, the paths for ensuring secure communication are a path between the user terminal 110 and the registration encryption server 130, a path between the user terminal 110 and the collation encryption server 140, and a path between the registration encryption server 130 and the collation encryption server 140. Other paths may be unsecure paths. The secure path is indicated by a solid line, and the unsecure path is indicated by a broken line. Regarding symbols, p represents plaintext information, c represents encryption information, and k represents an encryption key. The number attached to each symbol corresponds to the number of the plaintext information, the encryption information, or the encryption key of the disclosure. Details of the registration procedure and the authentication agency procedure will be described below.

[Registration Procedure]

The registration procedure is performed for each of registration of the user terminal 110 and registration of the service server 120. The mechanism itself of the registration process is similar to the method of Reference Literature 1.

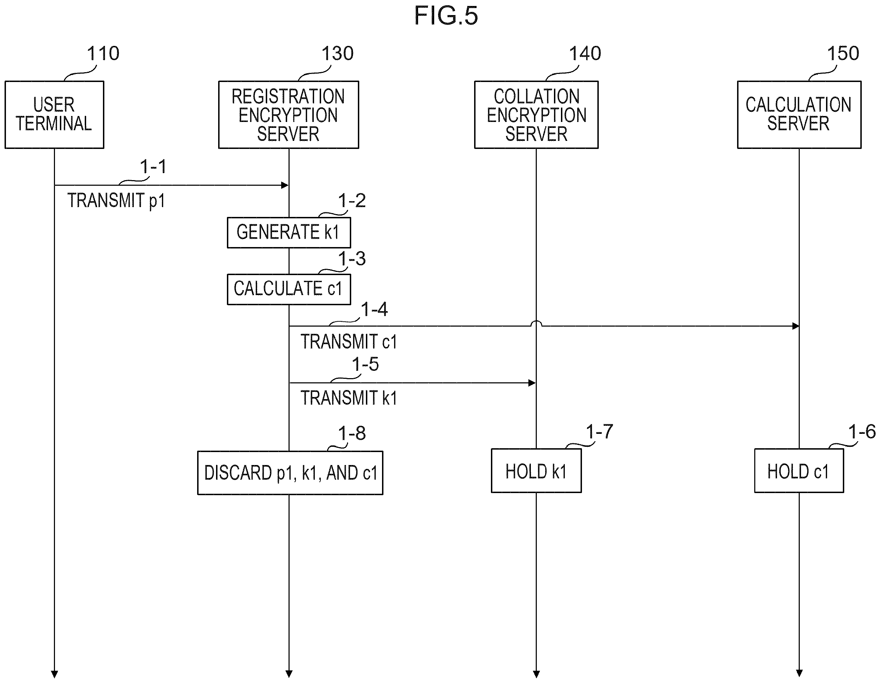

First, the registration procedure of the user terminal 110 will be described. Fig. 5 is a sequence diagram illustrating a flow of the registration procedure of the user terminal 110.

1-1. The user terminal 110 transmits personal information p1 to the registration encryption server 130 by using a secure communication path. The secure communication path is a direct input to the registration encryption server 130 or SSL/TSL communication.

1-2. The registration encryption server 130 generates an encryption key k1 as a one-time key.

1-3. The registration encryption server 130 calculates encryption information c 1 by the following Formula (1). The operation symbol in the formula is an exclusive OR.

[Math. 1]

$$p1 \oplus k1 = c1 \quad ...(1)$$

1-4. The registration encryption server 130 transmits c1 to the calculation server 150 by using an unsecure communication path.

1-5. The registration encryption server 130 transmits k1 to the collation encryption server 140 by using a secure communication path.

1-6. The calculation server 150 holds c1.

1-7. The collation encryption server 140 holds k1.

1-8. The registration encryption server 130 discards p1, k1, and c1.

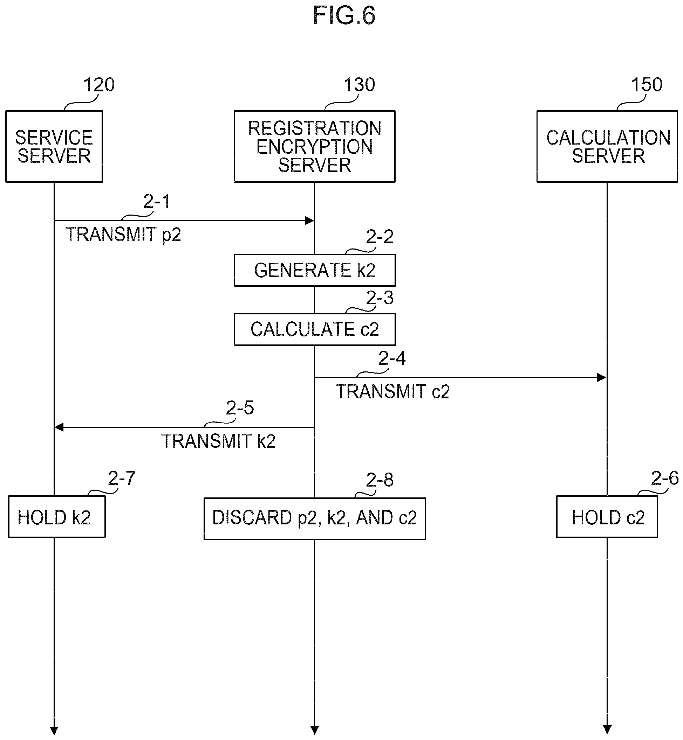

Next, the registration procedure of the service server 120 will be described. The service server 120 is registered for each service server 120. Fig. 6 is a sequence diagram illustrating a flow of the registration procedure of the service server 120.

2-1. The service server 120 transmits certain information p2 to the registration encryption server 130 by using a secure communication path.

2-2. The registration encryption server 130 generates an encryption key k2 which is a one-time key.

2-3. The registration encryption server 130 calculates encryption information c2 by the following Formula (2).

[Math. 2]

$$p2 \oplus k2 = c2 \quad ...(2)$$

2-4. The registration encryption server 130 transmits c2 to the calculation server 150 by using an unsecure communication path.

2-5. The registration encryption server 130 transmits k2 to the service server 120 by using a secure communication path.

2-6. The calculation server 150 holds c2.

2-7. The service server 120 holds k2.

2-8. The registration encryption server 130 discards p2, k2, and c2.

As described above, the point that the service server 120 holds k2 is different from that at the time of registering the user terminal 110. The registration procedure has been described above.

[Authentication Agency Procedure]

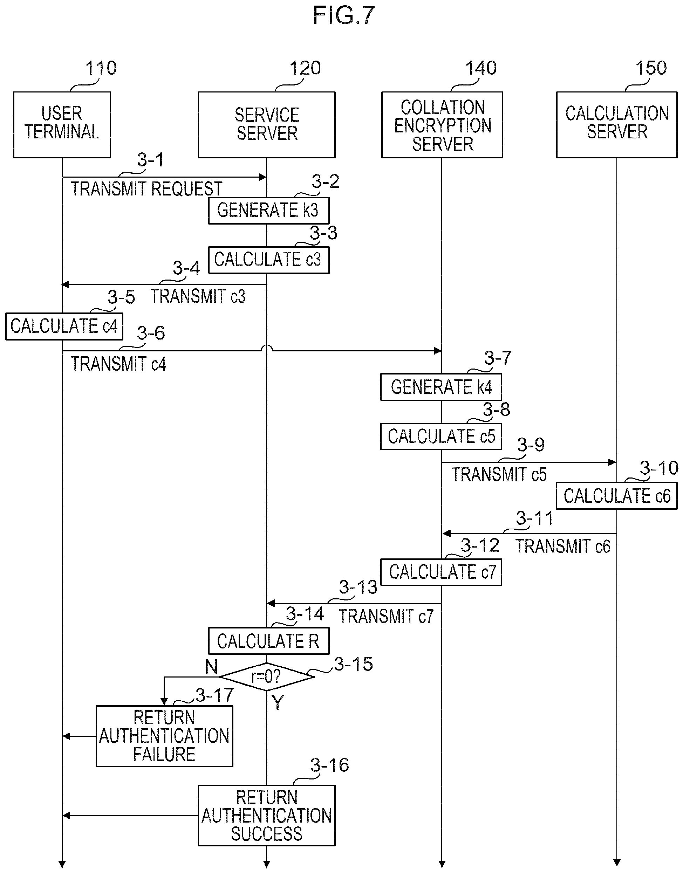

The authentication agency procedure (collation procedure) in a case where the user terminal 110 uses a service provided by the service server 120 will be described. Fig. 7 is a sequence diagram illustrating a flow of the authentication agency procedure (collation procedure).

Here, the user terminal 110 uses personal information p1', and the service server 120 uses certain information p2'. In a case where an attempt of the authentication succeeds, Condition 1 of the following Formula (3) is satisfied.

[Math. 3]

EP 4 109 813 B1

$$p1 = p1' \text{ and } p2 = p2'$$

or

$$p1 = p2 \text{ and } p1' = p2'$$

or

$$p1 = p2' \text{ and } p2 = p1'$$

(Condition 1).

$$...(3)$$

3-1. The user terminal 110 transmits a request for an authentication request for service use, to the service server 120.

3-2. Upon receiving the request, the service server 120 generates an encryption key k3 which is a one-time key.

3-3. The service server 120 calculates encryption information c3 by the following Formula (4).

[Math. 4]

$$p2' \oplus k3 = c3 \qquad ...(4)$$

3-4. The service server 120 transmits c3 to the user terminal 110 by using an unsecure communication path.

3-5. The user terminal 110 calculates encryption information c4 by the following Formula (5).

[Math. 5]

$$p1' \oplus c3 = c4 \qquad ...(5)$$

3-6. The user terminal 110 transmits c4 to the collation encryption server 140 by using a secure communication path.

3-7. Upon receiving c4, the collation encryption server 140 generates an encryption key k4 which is a one-time key.

3-8. The collation encryption server 140 calculates encryption information c5 by the following Formula (6).

[Math. 6]

$$c4 \oplus k4 = c5 \qquad ...(6)$$

3-9. The collation encryption server 140 transmits c5 to the calculation server 150 by using an unsecure communication path.

3-10. The calculation server 150 calculates encryption information c6 by the following Formula (7).

[Math. 7]

$$c5 \oplus c1 \oplus c2 = c6 \qquad ...(7)$$

Here, c6 can be expanded as the following Formula (8). Therefore, the encryption information c6 is encryption information capable of collating p1 and p1', and p2 and p2'.

[Math. 8]

$$c5 \oplus c1 \oplus c2 = (c4 \oplus k4) \oplus (p1 \oplus k1) \oplus (p2 \oplus k2)$$
$$= ((p1' \oplus c3) \oplus k4) \oplus (p1 \oplus k1) \oplus (p2 \oplus k2)$$
$$= (p1' \oplus (p2' \oplus k3) \oplus k4) \oplus (p1 \oplus k1) \oplus (p2 \oplus k2)$$
$$= (p1 \oplus p1') \oplus (p2 \oplus p2') \oplus k1 \oplus k2 \oplus k3 \oplus k4$$

(in a case where Condition 1 is satisfied, $(p1 \oplus p1') \oplus (p2 \oplus p2') = 0$)

$$...(8)$$

3-11. The calculation server 150 transmits c6 to the collation encryption server 140 by using an unsecure communication path.

3-12. The collation encryption server 140 calculates encryption information c7 by the following Formula (9).
[Math. 9]

$$c6 \oplus k1 \oplus k4 = c7 \qquad ...(9)$$

Here, c7 can be expanded as in the following Formula (10). Therefore, in a case where there are the encryption key k2 and the encryption key k3, it is possible to perform collation.
[Math. 10]

$$c6 \oplus k1 \oplus k4 = (p1 \oplus p1') \oplus (p2 \oplus p2') \oplus k1 \oplus k2 \oplus k3 \oplus k4 \oplus k1 \oplus k4$$
$$= (p1 \oplus p1') \oplus (p2 \oplus p2') \oplus k2 \oplus k3$$

$$...(10)$$

3-13. The collation encryption server 140 transmits c7 to the service server 120 by using an unsecure communication path. Formulas (6) to (10) are examples of an encryption collation function of the disclosure. c7 is an example of encryption information as a collation target in the disclosure.

3-14. The service server 120 calculates r by the following Formula (11). Formula (11) is an example of a collation function of the disclosure.
[Math. 11]

$$c7 \oplus k2 \oplus k3 = r \qquad ...(11)$$

3-15. The service server 120 performs determination. In the case of r = 0, the service server 120 determines that the attempt of the authentication has succeeded, and returns the result to the user terminal 110 (3-16). In the case of $r \neq 0$, the service server 120 determines that the attempt of the authentication has failed, and returns the result to the user terminal 110 (3-17).

The authentication agency procedure has been described above.

Next, a functional configuration of each device will be described.

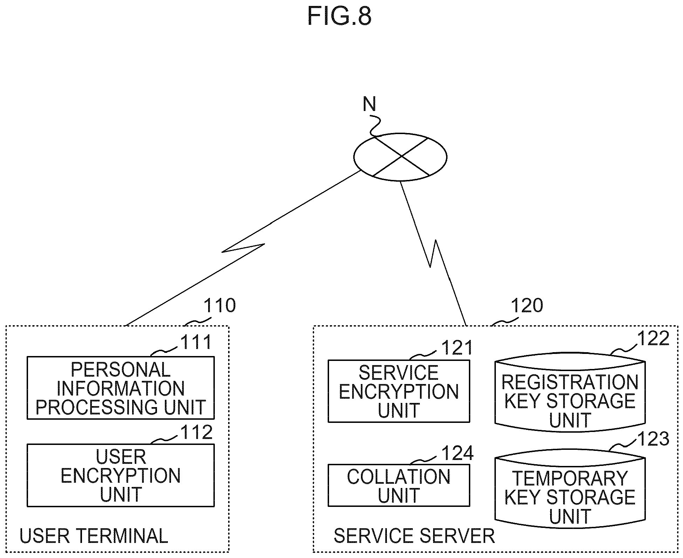

The functional configurations of the user terminal 110 and the service server 120 will be described. Fig. 8 is a block diagram illustrating specific functional configurations of the user terminal 110 and the service server 120. The user terminal 110 includes a personal information processing unit 111 and a user encryption unit 112. The service server 120 includes a service encryption unit 121, a registration key storage unit 122, a temporary key storage unit 123, and a collation unit 124.

The personal information processing unit 111 acquires personal information through various interfaces attached to the user terminal 110 and acquires plaintext information to be encrypted. In the case of a card, the personal information processing unit 111 acquires a numerical character and a character string as a card number. In the case of information of a fingerprint and glitter of an eye, the personal information processing unit 111 acquires an image. The acquired personal information is used in the processes of 1-1 and 3-5 described above.

The user encryption unit 112 executes the processes of 3-1 and 3-5 described above as processing related to various types of encryption in the user terminal 110.

The service encryption unit 121 executes the processes of 2-1 and 3-2 to 3-4 described above as processing related to various types of encryption in the service server 120.

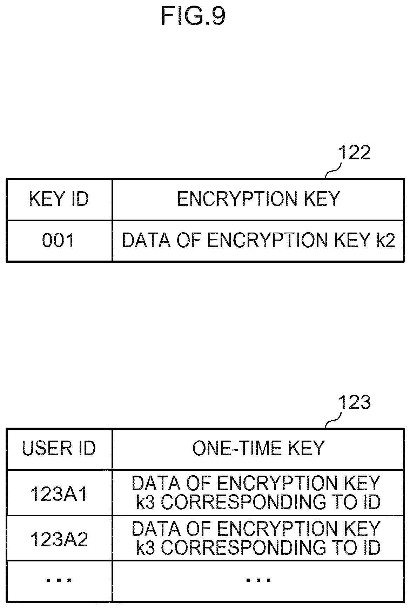

Fig. 9 is a diagram illustrating an example of encryption keys stored in the registration key storage unit 122 and the temporary key storage unit 123 of the service server 120. The registration key storage unit 122 stores the encryption key k2 held in 2-7 described above. The temporary key storage unit 123 stores the encryption key k3, which is the one-time key generated in 3-2 described above, for each user ID. In a case where there is a plurality of requests at the same time, a plurality of one time keys is stored for each user ID. The one-time key is discarded after a predetermined time.

The collation unit 124 executes the processes from 3-14 to 3-17 described above as processing related to collation.

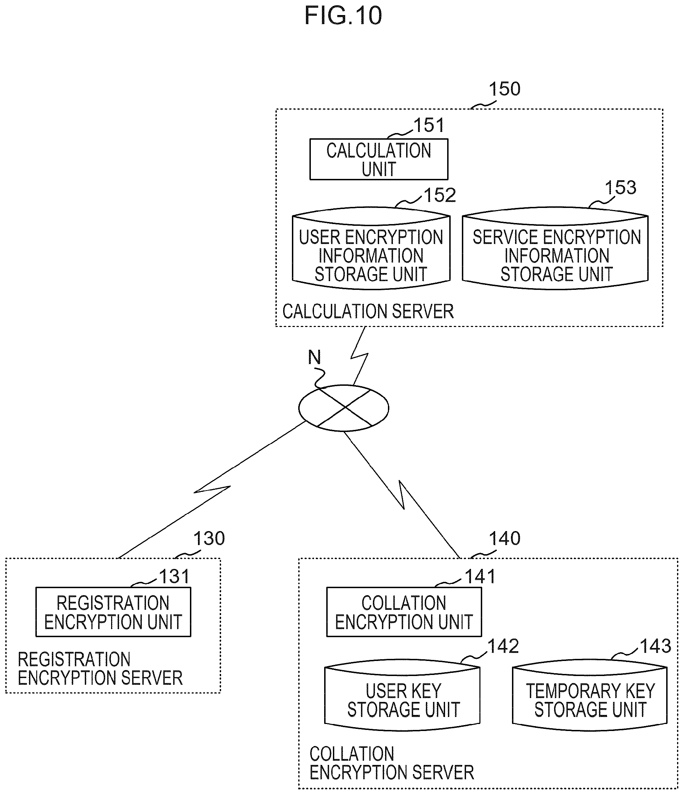

The functional configurations of the registration encryption server 130, the collation encryption server 140, and the calculation server 150 will be described. Fig. 10 is a block diagram illustrating specific functional configurations of the registration encryption server 130, the collation encryption server 140, and the calculation server 150. As illustrated in Fig. 10, the registration encryption server 130 includes a registration encryption unit 131. The collation encryption server 140 includes a collation encryption unit 141, a user key storage unit 142, and a temporary key storage unit 143. The calculation server 150 includes a calculation unit 151, a user encryption information storage unit 152, and a service encryption information storage unit 153.

The registration encryption unit 131 executes the processes of 1-2 to 1-5 and 2-2 to 2-5 described above as processing at the time of registration.

The collation encryption unit 141 executes the processes of 3-7 to 3-9, 3-12, and 3-13 described above as the processing at the time of collation.

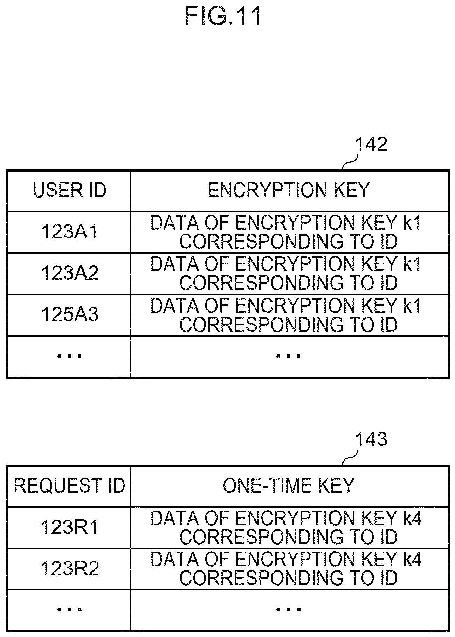

Fig. 11 is a diagram illustrating an example of encryption keys stored in the user key storage unit 142 and the temporary key storage unit 143 of the collation encryption server 140. The user key storage unit 142 stores the encryption key k1 held in 1-7 described above, for each user ID. The temporary key storage unit 143 stores an encryption key k7, which is the one time key generated in 3-7 described above, for each request ID. The request ID is an ID for identifying an authentication request.

The calculation unit 151 executes the processes of 3-10 and 3-11 described above as the processing at the time of collation.

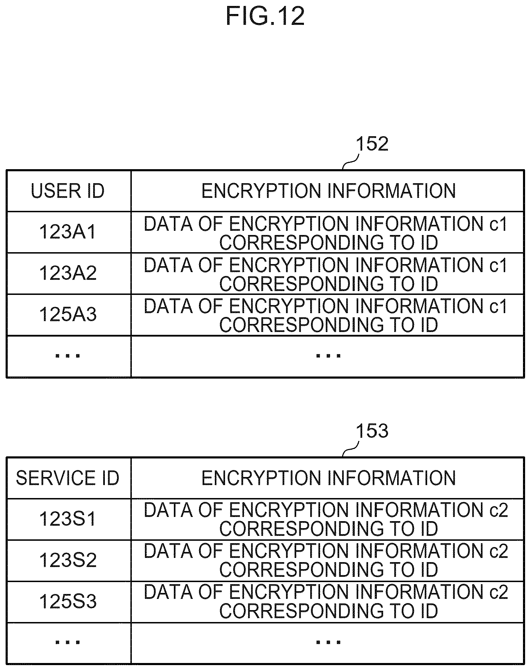

Fig. 12 is a diagram illustrating an example of pieces of encryption information stored in the user encryption information storage unit 152 and the service encryption information storage unit 153 of the calculation server 150. The user encryption information storage unit 152 stores the encryption information c1 held in 1-6 described above for each user ID. The service encryption information storage unit 153 stores the encryption information c2 held in 2-6 described above for each service ID.

As described above, according to the encryption authentication system according to the embodiment of the disclosure described above, it is possible to provide a cross-sectional authentication service at a high speed and with safety while concealing personal information of a user.

[Experimental Examples]

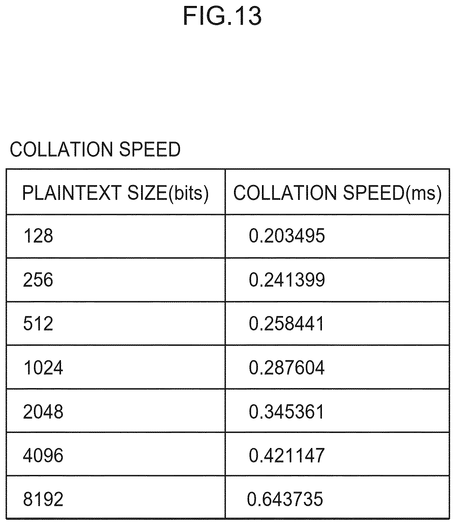

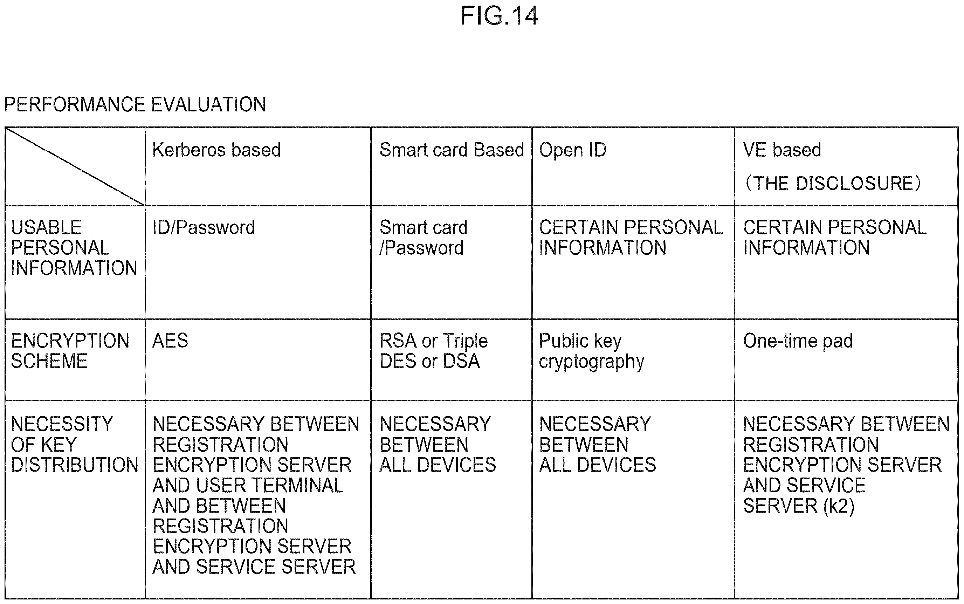

Experimental examples of the method in the embodiment of the disclosure will be described. Fig. 13 is a diagram illustrating an example of a collation speed of the method of the disclosure. Fig. 14 is a diagram illustrating an example of a case where another method is compared with the method of the disclosure. Fig. 13 illustrates the execution speed in a case where the size of the plaintext (p1 and p2) has been changed. Here, it can be understood that the execution speed is 1 ms or less even for 8192 bits. Since high-speed collation can be performed as described above, real-time authentication can be performed. In Fig. 14, the usable personal information, the encryption scheme, and the necessity of key distribution in the case of the Kerberos based, the smart card based, the open ID, and the VE base (the method of the disclosure) are compared. The method of the disclosure not only handles certain personal information but also distributes k2 to the service server 120 as to the necessity of key distribution. Therefore, there is no need for a large number of complex key management, and complexity of key management on implementation is also suppressed. In other methods, there is a need for key distribution among a plurality of devices. Thus, there is a problem that the method is complicated and the cost in implementation is high.

As described above, the collation is performed while the information is encrypted, and the collation result is obtained for the encrypted information. Therefore, even though the information exchanged on the network is acquired, it is not possible to specify the original information from the encrypted information. Therefore, there is an advantage that the authentication of the single sign-on can be performed while the confidentiality is maintained. In addition, since the authentication can be performed safely at a high speed, it is possible to provide a service highly convenient for the user and the service provider.

The disclosure is not limited to the above-described embodiment, and various modifications and applications can be made without departing from the gist of the present invention.

Various processes executed by the CPU reading software (program) in the above embodiment may be executed by various processors other than the CPU. Examples of the processor in this case include a programmable logic device (PLD) in which a circuit configuration can be changed after a field-programmable gate array (FPGA) or the like is manufactured, a dedicated electric circuit that is a processor having a circuit configuration exclusively designed for executing a specific process, such as an application specific integrated circuit (ASIC), and the like. The various processes may be executed by one of the various processors, or may be executed by a combination of two or more processors of the same type or different types (for example, a plurality of FPGAs, and a combination of a CPU and an FPGA). More specifically, the hardware structure of the various processors is an electric circuit in which circuit elements such as semiconductor elements are combined.

In the above embodiment, the aspect in which the program is stored (installed) in advance in the storage 14 has been described, but the embodiment is not limited thereto. The program may be provided in a form of being stored in a non-transitory storage medium such as a compact disk read only memory (CD-ROM), a digital versatile disk read only memory (DVD-ROM), and a universal serial bus (USB) memory. The program may be downloaded from an external device via a network.

**Claims**

1. An encryption authentication system (100) comprising:

    a user terminal (110) connected via the Internet;
    an encryption server (130, 140);
    a calculation server (150); and
    a service server (120), wherein:

        in a case in which the service server (120) receives a request from the user terminal (110), the service server (120) is configured to calculate third encryption information based on second plaintext information at a time of authentication and a third encryption key that is a temporary key, and to transmit the third encryption information to the user terminal (110),
        the user terminal (110) is configured to calculate fourth encryption information based on the received third encryption information and first plaintext information at the time of the authentication, and transmits the fourth encryption information to the encryption server (130, 140),
        the encryption server (130, 140) and the calculation server (150) are configured to cooperate with each other to perform a predetermined process by a predetermined encryption collation function, and to calculate encryption information as a collation target based on the fourth encryption information, a fourth encryption key that is a temporary key, preregistered registration encryption information including first encryption information, second encryption information, and a first encryption key, and
        the encryption server (130, 140) is configured to transmit fifth encryption information obtained by encrypting the fourth encryption information with a fourth encryption key that is a temporary key, to the calculation server (150),
        the calculation server (150) is configured to calculate the sixth encryption information by the encryption collation function, based on the fifth encryption information encrypted with the fourth encryption key, the first encryption information, and the second encryption information, the sixth encryption information being for obtaining a coincidence degree between a first plaintext information at a time of registration and the first plaintext information at the time of the authentication, and a coincidence degree between a second plaintext information at the time of the registration and the second plaintext information at the time of the authentication and transmits the sixth encryption information to the encryption server,
        the encryption server (130, 140) is configured to calculate the encryption information as the collation target based on the sixth encryption information, the first encryption key and the fourth encryption key, and transmit the encryption information to the service server (120);
        the service server (120) is configured to obtain the coincidence degree between the first plaintext information at the time of the registration and the first plain text information at the time of the authentication, and the coincidence degree between the second plaintext information at the time of the registration and the second plain text information at the time of the authentication, by the collation function using the encryption information as the collation target, the third encryption key and a second encryption key used to calculate the registration encryption information, and to transmit an authentication result corresponding to the coincidence degree to the user terminal (110).

2. The encryption authentication system (100) according to claim 1, wherein:

   the service server (120) includes a plurality of service servers, and
   the encryption server (130, 140) and the calculation server (150) are configured to perform calculation of the encryption information as the collation target for each of the plurality of service servers.

3. The encryption authentication system (100) according to claim 2, wherein:

   predetermined cooperation related to the plurality of service servers (120) is set in the user terminal (110) or in the encryption server (130, 140), and
   the user terminal (110) is configured to transmit a request for authentication to the plurality of service servers (120) simultaneously or at a predetermined timing, in accordance with the setting.

4. The encryption authentication system (100) according to any one of claims 1 to 3, wherein:
   the user terminal (110) is configured to read and use predetermined information including card information or biometric information by using the first plaintext information at the time of the authentication as information regarding a user.

5. The encryption authentication system (100) according to any one of claims 1 to 4, wherein:

   the encryption server includes a registration encryption server and a collation encryption server,
   the registration encryption server (130) is configured to receive the first plaintext information at the time of the registration from the user terminal (110) and the second plaintext information at the time of registration from the service server (120);
   the registration encryption server (130) is configured to register, as the registration encryption information, the first encryption information calculated by using the first encryption key and the first plaintext information at the time of registering the user terminal (110), the first encryption key used in the calculation, and the second encryption information calculated by using the second encryption key and the second plaintext information at the time of registering the service server (120), in the calculation server (150), the first encryption key is sent to the collation encryption server (140), and
   the second encryption key is transmitted to the service server (120).

6. The encryption authentication system (100) according to claim 5, wherein:
   a path between the user terminal (110) and the registration encryption server (130), a path between the user terminal (110) and the collation encryption server (140), and a path between the registration encryption server (130) and the collation encryption server (140) are designed to be secure paths.

**Patentansprüche**

1. Verschlüsselungsauthentifizierungssystem (100), umfassend:

   ein Benutzerendgerät (110), das über das Internet verbunden ist;
   einen Verschlüsselungsserver (130, 140);
   einen Berechnungsserver (150); und
   einen Dienstserver (120), wobei:

   für den Fall, dass der Dienstserver (120) eine Anforderung von dem Benutzerendgerät (110) empfängt, der Dienstserver (120) dafür eingerichtet ist, dritte Verschlüsselungsinformationen auf der Grundlage zweiter Klartextinformationen zu einem Zeitpunkt der Authentifizierung und eines dritten Verschlüsselungsschlüssels, der ein temporärer Schlüssel ist, zu berechnen und die dritten Verschlüsselungsinformationen an das Benutzerendgerät (110) zu senden,

das Benutzerendgerät (110) dafür eingerichtet ist, vierte Verschlüsselungsinformationen auf der Grundlage der empfangenen dritten Verschlüsselungsinformationen und der ersten Klartextinformationen zum Zeitpunkt der Authentifizierung zu berechnen und die vierten Verschlüsselungsinformationen an den Verschlüsselungsserver (130, 140) zu senden,

der Verschlüsselungsserver (130, 140) und der Berechnungsserver (150) dafür eingerichtet sind, miteinander zusammenzuwirken, um einen zuvor festgelegten Prozess durch eine zuvor festgelegte Verschlüsselungskollationsfunktion durchzuführen und Verschlüsselungsinformationen als ein Kollationsziel auf der Grundlage der vierten Verschlüsselungsinformationen, eines vierten Verschlüsselungsschlüssels, der ein temporärer Schlüssel ist, vorregistrierter Registrierungsverschlüsselungsinformationen,

einschließlich erster Verschlüsselungsinformationen, zweiter Verschlüsselungsinformationen und eines ersten Verschlüsselungsschlüssels, zu berechnen, und

der Verschlüsselungsserver (130, 140) dafür eingerichtet ist, fünfte Verschlüsselungsinformationen, die durch Verschlüsseln der vierten Verschlüsselungsinformationen mit einem vierten Verschlüsselungsschlüssel, der ein temporärer Schlüssel ist, erhalten werden, an den Berechnungsserver (150) zu senden,

der Berechnungsserver (150) dafür eingerichtet ist, die sechsten Verschlüsselungsinformationen durch die Verschlüsselungskollationsfunktion auf der Grundlage der fünften Verschlüsselungsinformationen, die mit dem vierten Verschlüsselungsschlüssel verschlüsselt sind, der ersten Verschlüsselungsinformationen und der zweiten Verschlüsselungsinformationen zu berechnen, wobei die sechsten Verschlüsselungsinformationen dazu dienen, einen Übereinstimmungsgrad zwischen ersten Klartextinformationen zum Zeitpunkt der Registrierung und den ersten Klartextinformationen zum Zeitpunkt der Authentifizierung und einen Übereinstimmungsgrad zwischen zweiten Klartextinformationen zum Zeitpunkt der Registrierung und den zweiten Klartextinformationen zum Zeitpunkt der Authentifizierung zu erhalten, und die sechsten Verschlüsselungsinformationen an den Verschlüsselungsserver zu senden,

der Verschlüsselungsserver (130, 140) dafür eingerichtet ist, die Verschlüsselungsinformationen als das Kollationsziel auf der Grundlage der sechsten Verschlüsselungsinformationen, des ersten Verschlüsselungsschlüssels und des vierten Verschlüsselungsschlüssels zu berechnen und die Verschlüsselungsinformationen an den Dienstserver (120) zu senden;

der Dienstserver (120) dafür eingerichtet ist, den Überstimmungsgrad zwischen den ersten Klartextinformationen zum Zeitpunkt der Registrierung und den ersten Klartextinformationen zum Zeitpunkt der Authentifizierung und den Überstimmungsgrad zwischen den zweiten Klartextinformationen zum Zeitpunkt der Registrierung und den zweiten Klartextinformationen zum Zeitpunkt der Authentifizierung durch die Kollationsfunktion unter Verwendung der Verschlüsselungsinformationen als das Kollationsziel, des dritten Verschlüsselungsschlüssels und eines zweiten Verschlüsselungsschlüssels, die zum Berechnen der Registrierungsverschlüsselungsinformationen verwendet werden, zu erhalten und ein dem Überstimmungsgrad entsprechendes Authentifizierungsergebnis an das Benutzerendgerät (110) zu senden.

2. Verschlüsselungsauthentifizierungssystem (100) nach Anspruch 1, wobei:
der Dienstserver (120) mehrere Dienstserver umfasst und der Verschlüsselungsserver (130, 140) und der Berechnungsserver (150) dafür eingerichtet sind, die Berechnung der Verschlüsselungsinformationen als das Kollationsziel für jeden der mehreren Dienstserver durchführen.

3. Verschlüsselungsauthentifizierungssystem (100) nach Anspruch 2, wobei:

eine zuvor festgelegte Zusammenarbeit in Bezug auf die mehreren Dienstserver (120) in dem Benutzerendgerät (110) oder in dem Verschlüsselungsserver (130, 140) eingestellt wird und

das Benutzerendgerät (110) dafür eingerichtet ist, eine Authentifizierungsanforderung an die mehreren Dienstserver (120) gleichzeitig oder an einem zuvor festgelegten Zeitpunkt gemäß der Einstellung zu senden.

4. Verschlüsselungsauthentifizierungssystem (100) nach einem der Ansprüche 1 bis 3, wobei:
das Benutzerendgerät (110) dafür eingerichtet ist, zuvor festgelegte Informationen, einschließlich Karteninformationen oder biometrischer Informationen, unter Verwendung der ersten Klartextinformationen zum Zeitpunkt der Authentifizierung als Informationen bezüglich eines Benutzers zu lesen und zu verwenden.

5. Verschlüsselungsauthentifizierungssystem (100) nach einem der Ansprüche 1 bis 4, wobei:

der Verschlüsselungsserver einen Registrierungsverschlüsselungsserver und einen Kollationsverschlüsselungsserver umfasst,

der Registrierungsverschlüsselungsserver (130) dafür eingerichtet ist, die ersten Klartextinformationen zum Zeitpunkt der Registrierung von dem Benutzerendgerät (110) und die zweiten Klartextinformationen zum Zeitpunkt der Registrierung von dem Dienstserver (120) zu empfangen;

der Registrierungsverschlüsselungsserver (130) dafür eingerichtet ist, die ersten Verschlüsselungsinformationen, die unter Verwendung des ersten Verschlüsselungsschlüssels und der ersten Klartextinformationen zum Zeitpunkt der Registrierung des Benutzerendgeräts (110) berechnet wurden, den ersten Verschlüsselungsschlüssel, der bei der Berechnung verwendet wurde, und die zweiten Verschlüsselungsinformationen, die unter Verwendung des zweiten Verschlüsselungsschlüssels und der zweiten Klartextinformationen zum Zeitpunkt der Registrierung des Dienstservers (120) berechnet wurden, in dem Berechnungsserver (150) als die Registrierungsverschlüsselungsinformationen zu registrieren,

der erste Verschlüsselungsschlüssel an den Kollationsverschlüsselungsserver (140) gesendet wird und der zweite Verschlüsselungsschlüssel an den Dienstserver (120) gesendet wird.

6. Verschlüsselungsauthentifizierungssystem (100) nach Anspruch 5, wobei:

ein Pfad zwischen dem Benutzerendgerät (110) und dem Registrierungsverschlüsselungsserver (130), ein Pfad zwischen dem Benutzerendgerät (110) und dem Kollationsverschlüsselungsserver (140) und ein Pfad zwischen dem Registrierungsverschlüsselungsserver (130) und dem Kollationsverschlüsselungsserver (140) als sichere Pfade ausgelegt sind.

## Revendications

1. Système d'authentification par cryptage (100) comprenant :

un terminal d'utilisateur (110) connecté via Internet ;
un serveur de cryptage (130, 140) ;
un serveur de calcul (150) ; et
un serveur de services (120), dans lequel :

dans le cas où le serveur de services (120) reçoit une demande du terminal d'utilisateur (110), le serveur de services (120) est configuré pour calculer des troisièmes informations de cryptage sur la base de deuxièmes informations en clair au moment de l'authentification et d'une troisième clé de cryptage qui est une clé temporaire, et pour transmettre les troisièmes informations de cryptage au terminal d'utilisateur (110),
le terminal d'utilisateur (110) est configuré pour calculer des quatrièmes informations de cryptage sur la base des troisièmes informations de cryptage reçues et de premières informations en clair au moment de l'authentification, et transmet les quatrièmes informations de cryptage au serveur de cryptage (130, 140),
le serveur de cryptage (130, 140) et le serveur de calcul (150) sont configurés pour coopérer l'un avec l'autre afin d'exécuter un processus prédéterminé par une fonction de collationnement de cryptage prédéterminée, et pour calculer des informations de cryptage en tant que cible de collationnement sur la base des quatrièmes informations de cryptage, d'une quatrième clé de cryptage qui est une clé temporaire, d'informations de cryptage d'enregistrement préenregistrées incluant des premières informations de cryptage, des deuxièmes informations de cryptage et une première clé de cryptage, et
le serveur de cryptage (130, 140) est configuré pour transmettre au serveur de calcul (150) des cinquièmes informations de cryptage obtenues en cryptant les quatrièmes informations de cryptage avec une quatrième clé de cryptage qui est une clé temporaire,
le serveur de calcul (150) est configuré pour calculer les sixièmes informations de cryptage par la fonction de collationnement de cryptage, sur la base des cinquièmes informations de cryptage cryptées avec la quatrième clé de cryptage, des premières informations de cryptage et des deuxièmes informations de cryptage, les sixièmes informations de cryptage étant destinées à obtenir un degré de coïncidence entre des premières informations en clair au moment de l'enregistrement et les premières informations en clair au moment de l'authentification, et un degré de coïncidence entre des deuxièmes informations en clair au moment de l'enregistrement et les deuxièmes informations en clair au moment de l'authentification, et transmet les sixièmes informations de cryptage au serveur de cryptage,
le serveur de cryptage (130, 140) est configuré pour calculer les informations de cryptage en tant que cible de collationnement sur la base des sixièmes informations de cryptage, de la première clé de cryptage et de la quatrième clé de cryptage, et pour transmettre les informations de cryptage au serveur de services (120) ;
le serveur de services (120) est configuré pour obtenir le degré de coïncidence entre les premières informations en clair au moment de l'enregistrement et les premières informations en clair au moment de l'authentification, et le degré de coïncidence entre les deuxièmes informations en clair au moment de l'enregistrement et les deuxièmes informations en clair au moment de l'authentification, par la fonction de collationnement en utilisant les informations de cryptage en tant que cible de collationnement, la troisième clé de cryptage et une deuxième clé de cryptage utilisée pour calculer les informations de cryptage d'enregistrement, et pour transmettre un résultat d'authentification correspondant au degré de coïncidence au terminal d'utilisateur (110).

2.  Système d'authentification par cryptage (100) selon la revendication 1, dans lequel :

    le serveur de services (120) inclut une pluralité de serveurs de services, et
    le serveur de cryptage (130, 140) et le serveur de calcul (150) sont configurés pour effectuer le calcul des informations de cryptage en tant que cible de collationnement pour chacun de la pluralité de serveurs de services.

3.  Système d'authentification par cryptage (100) selon la revendication 2, dans lequel :

    la coopération prédéterminée relative à la pluralité de serveurs de services (120) est réglée dans le terminal d'utilisateur (110) ou dans le serveur de cryptage (130, 140), et
    le terminal d'utilisateur (110) est configuré pour transmettre une demande d'authentification à la pluralité de serveurs de services (120) simultanément ou à un rythme prédéterminé, en fonction du réglage.

4.  Système d'authentification par cryptage (100) selon l'une quelconque des revendications 1 à 3, dans lequel :
    le terminal d'utilisateur (110) est configuré pour lire et utiliser des informations prédéterminées, y compris des informations de carte ou des informations biométriques, en utilisant les premières informations en clair au moment de l'authentification en tant qu'informations concernant un utilisateur.

5.  Système d'authentification par cryptage (100) selon l'une quelconque des revendications 1 à 4, dans lequel :

    le serveur de cryptage inclut un serveur de cryptage d'enregistrement et un serveur de cryptage de collationnement,
    le serveur de cryptage d'enregistrement (130) est configuré pour recevoir les premières informations en clair au moment de l'enregistrement de la part du terminal d'utilisateur (110) et les deuxièmes informations en clair au moment de l'enregistrement de la part du serveur de services (120) ;
    le serveur de cryptage d'enregistrement (130) est configuré pour enregistrer, en tant qu'informations de cryptage d'enregistrement, les premières informations de cryptage calculées en utilisant la première clé de cryptage et les premières informations en clair au moment de l'enregistrement du terminal d'utilisateur (110), la première clé de cryptage utilisée dans le calcul et les deuxièmes informations de cryptage calculées en utilisant la deuxième clé de cryptage et les deuxièmes informations en clair au moment de l'enregistrement du serveur de services (120), dans le serveur de calcul (150), la première clé de cryptage est envoyée au serveur de cryptage de collationnement (140) et la deuxième clé de cryptage est transmise au serveur de services (120).

6.  Système d'authentification par cryptage (100) selon la revendication 5, dans lequel :
    un chemin entre le terminal d'utilisateur (110) et le serveur de cryptage d'enregistrement (130), un chemin entre le terminal d'utilisateur (110) et le serveur de cryptage de collationnement (140), et un chemin entre le serveur de cryptage d'enregistrement (130) et le serveur de cryptage de collationnement (140) sont conçus pour être des chemins sécurisés.

# FIG.1

AUTHENTICATION AGENCY SERVICE

PLURALITY OF SERVICE PROVIDERS

PROVIDE ONLY
AUTHENTICATION
INFORMATION

ENCRYPT AND REGISTER
PERSONAL INFORMATION

PERFORM AUTHENTICATION
WHILE PERSONAL INFORMATION
IS CONCEALED

USER

EP 4 109 813 B1

FIG.2

# FIG.3

110(120,130,140,150)

11
(21,31,41,51)

| CPU |

12
(22,32,42,52)

| ROM |

13
(23,33,43,53)

| RAM |

14
(24,34,44,54)

| STORAGE |

15
(25,35,45,55)

| INPUT UNIT |

16
(26,36,46,56)

| DISPLAY UNIT |

17
(27,37,47,57)

| COMMUNICATION I/F |

19(29,39,49,59)

# FIG.4

c1,c2

CALCULATION
SERVER
(150)

CALCULATE c6

k1,k4

p2,k2,k3

REGISTRATION
ENCRYPTION
SERVER (130)

COLLATION
ENCRYPTION
SERVER (140)

SERVICE SERVER
(120)

GENERATE k1 AND k2
CALCULATE c1 AND c2

GENERATE k4
CALCULATE c5 AND c7

GENERATE k3
CALCULATE c3
COLLATE c7

p1

USER TERMINAL
(110)

CALCULATE c4

EP 4 109 813 B1

# FIG.5

EP 4 109 813 B1

# FIG.6

# FIG.7

# FIG.8

# FIG.9

122

| KEY ID | ENCRYPTION KEY |
|--------|----------------|
| 001 | DATA OF ENCRYPTION KEY k2 |

123

| USER ID | ONE-TIME KEY |
|---------|--------------|
| 123A1 | DATA OF ENCRYPTION KEY k3 CORRESPONDING TO ID |
| 123A2 | DATA OF ENCRYPTION KEY k3 CORRESPONDING TO ID |
| . . . | . . . |

# FIG.10

150

151
CALCULATION UNIT

152
USER ENCRYPTION INFORMATION STORAGE UNIT

153
SERVICE ENCRYPTION INFORMATION STORAGE UNIT

CALCULATION SERVER

N

130

131
REGISTRATION ENCRYPTION UNIT

REGISTRATION ENCRYPTION SERVER

140

141
COLLATION ENCRYPTION UNIT

142
USER KEY STORAGE UNIT

143
TEMPORARY KEY STORAGE UNIT

COLLATION ENCRYPTION SERVER

# FIG.11

142

| USER ID | ENCRYPTION KEY |
|---------|----------------|
| 123A1 | DATA OF ENCRYPTION KEY k1 CORRESPONDING TO ID |
| 123A2 | DATA OF ENCRYPTION KEY k1 CORRESPONDING TO ID |
| 125A3 | DATA OF ENCRYPTION KEY k1 CORRESPONDING TO ID |
| . . . | . . . |

143

| REQUEST ID | ONE-TIME KEY |
|------------|--------------|
| 123R1 | DATA OF ENCRYPTION KEY k4 CORRESPONDING TO ID |
| 123R2 | DATA OF ENCRYPTION KEY k4 CORRESPONDING TO ID |
| . . . | . . . |

# FIG.12

152

| USER ID | ENCRYPTION INFORMATION |
|---------|------------------------|
| 123A1 | DATA OF ENCRYPTION INFORMATION c1 CORRESPONDING TO ID |
| 123A2 | DATA OF ENCRYPTION INFORMATION c1 CORRESPONDING TO ID |
| 125A3 | DATA OF ENCRYPTION INFORMATION c1 CORRESPONDING TO ID |
| . . . | . . . |

153

| SERVICE ID | ENCRYPTION INFORMATION |
|------------|------------------------|
| 123S1 | DATA OF ENCRYPTION INFORMATION c2 CORRESPONDING TO ID |
| 123S2 | DATA OF ENCRYPTION INFORMATION c2 CORRESPONDING TO ID |
| 125S3 | DATA OF ENCRYPTION INFORMATION c2 CORRESPONDING TO ID |
| . . . | . . . |

# FIG.13

COLLATION SPEED

| PLAINTEXT SIZE(bits) | COLLATION SPEED(ms) |
|---|---|
| 128 | 0.203495 |
| 256 | 0.241399 |
| 512 | 0.258441 |
| 1024 | 0.287604 |
| 2048 | 0.345361 |
| 4096 | 0.421147 |
| 8192 | 0.643735 |

PERFORMANCE EVALUATION

FIG.14

| | Kerberos based | Smart card Based | Open ID | VE based (THE DISCLOSURE) |
|---|---|---|---|---|
| USABLE PERSONAL INFORMATION | ID/Password | Smart card /Password | CERTAIN PERSONAL INFORMATION | CERTAIN PERSONAL INFORMATION |
| ENCRYPTION SCHEME | AES | RSA or Triple DES or DSA | Public key cryptography | One-time pad |
| NECESSITY OF KEY DISTRIBUTION | NECESSARY BETWEEN REGISTRATION ENCRYPTION SERVER AND USER TERMINAL AND BETWEEN REGISTRATION ENCRYPTION SERVER AND SERVICE SERVER | NECESSARY BETWEEN ALL DEVICES | NECESSARY BETWEEN ALL DEVICES | NECESSARY BETWEEN REGISTRATION ENCRYPTION SERVER AND SERVICE SERVER (k2) |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002032340 A
- JP 2002335239 A
- JP 2011238036 A
- JP 6518378 B